# EUROPÄISCHE PATENTANMELDUNG

(11) **EP 1 274 276 A2**
(43) Veröffentlichungstag der Anmeldung: **08.01.2003**
(21) Anmeldenummer: 02100760.4
(22) Anmeldetag: 28.06.2002
(51) Int. Cl.: H04R 17/00

(54) **Elektronisches Gerät**

(30) Priorität: 05.07.2001 DE 10132590
(71) Anmelder: SIEMENS AKTIENGESELLSCHAFT, 80333 München (DE)
(72) Erfinder: Pflaum, Karl-Heinz, 46395, Bocholt (DE)

(57) **Zusammenfassung**

Die von einem zur Ruftonausgabe vorgesehenen Piezoelement eines elektronischen Gerätes erzeugte Spannung wird in Beschleunigungsinformationen über das Gerät umgesetzt.

## Beschreibung

Die Erfindung betrifft ein elektronisches Gerät, insbesondere ein Mobiltelefon oder einen tragbaren Computer, mit einem Piezoelement zur Ausgabe eines akustischen Signals und mit einer Wechselspannungseinheit zur Ausgabe einer Wechselspannung, die dem Piezoelement zugeführt wird. Derartige Geräte, wie beispielsweise Mobiltelefone sind bekannt.

Die rasante technische Entwicklung auf dem Gebiet der Mobilkommunikation hat in den letzten Jahren außerdem zur Entwicklung und Bereitstellung einer Vielzahl verschiedener Applikationen für Mobiltelefone geführt. So ist es bekannt, Mobiltelefone mit einem elektronischen Terminkalender, mit Spielen oder mit einem MP3-Player zur Ausgabe von Musik auszustatten. Aufgrund des zunehmenden Wunsches der Kunden nach kleinen Mobiltelefonen ist hierbei allerdings immer darauf zu achten, daß die Bereitstellung weiterer Applikationen nicht zu schwereren oder größeren Mobiltelefonen führt.

Der Erfindung liegt nun die Aufgabe zugrunde, ein kleines und leichtes elektronisches Gerät mit einem Piezoelement zur Ausgabe eines akustischen Signals und mit einer Wechselspannungseinheit zur Ausgabe einer Wechselspannung, die dem Piezoelement zugeführt wird, anzugeben, das die Erfassung von Beschleunigungsinformationen über das Gerät ermöglicht.

Diese Aufgabe wird durch die Merkmale des unabhängigen Anspruchs gelöst. Vorteilhafte und zweckmäßige Weiterbildungen ergeben sich aus den abhängigen Ansprüchen.

Erfindungsgemäß ist also eine Spannungserfassungseinheit zur Erfassung einer vom Piezoelement erzeugten Spannung und eine Umsetzeinheit zur Umsetzung der erfaßten Spannung in Beschleunigungsinformationen über das Mobiltelefons vorgesehen.

Dadurch wird durch die doppelte Nutzung eines Elementes des elektronischen Gerätes, nämlich des Piezoelementes, zur Erzeugung eines akustischen Signals auf der einen Seite und zur Erzeugung von Beschleunigungsinformationen über das Gerät auf der anderen Seite die Bereitstellung einer Reihe weiterer - auf Beschleunigungsinformationen des Gerätes basierender - Applikationen ermöglicht, ohne das Gewicht oder die Ausmaße des Gerätes wesentlich zu vergrößern.

Die Erfindung beruht dabei auf der Erkenntnis der Reversibilität des piezoelektrischen Effektes und dem Gedanken, diese Reversibilität zu nützen, um das Piezoelement neben der Ausgabe akustischer Informationen zu weiteren Applikationen zu verwenden. So erfolgt die Ausgabe eines akustischen Signals durch das Piezoelement insbesondere dadurch, dass durch das Anlegen einer Wechselspannung an das Piezoelement eine Membran des Piezoelementes in Schwingungen versetzt wird; umgekehrt wird durch eine Beschleunigung des Gerätes und somit der Membran des Piezoelementes eine Spannung erzeugt, welche von entsprechenden Erfassungsmitteln erfaßt werden kann und schließlich in Informationen über die Beschleunigung des Gerätes oder davon abhängige Informationen umgesetzt werden kann.

So sehen Weiterbildungen der Erfindung vor, die durch die Spannungserfassungseinheit erfaßte vom Piezoelement generierte Spannung in eine Schrittzahl eines das Gerät tragenden Benutzers, in eine Geschwindigkeit des Gerätes oder in einen Betriebszustandswechsel des Gerätes umzusetzen.

Die Erfindung wird im Folgenden anhand bevorzugter Ausführungsbeispiele näher beschrieben, zu deren Erläuterung nachstehende Figur dient:

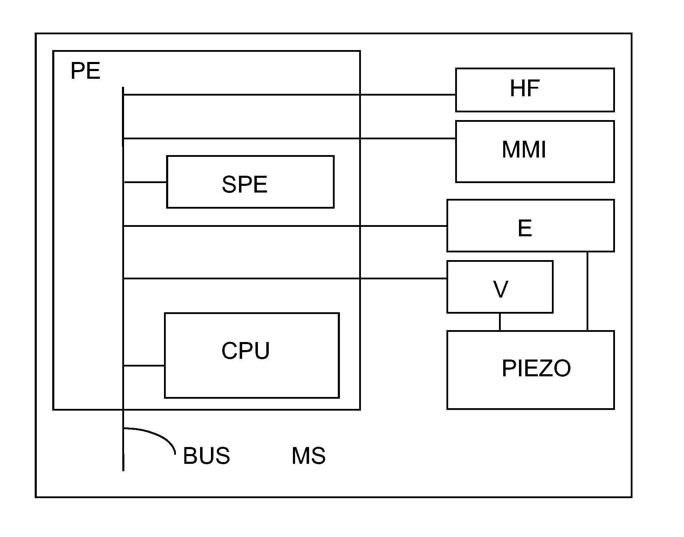

Figur 1 Blockschaltbild einer Mobilstation.

Figur 1 zeigt eine Mobilstation MS (Mobiltelefon), welche eine Bedieneinrichtung MMI eine Hochfrequenzeinrichtung HF und eine Prozessoreinrichtung PE enthält. Die Bedieneinrichtung MMI umfaßt eine Anzeigeeinrichtung, wie beispielsweise ein Grafikdisplay, und Betätigungselemente, wie beispielsweise Tasten oder Softkeys.

Zur Steuerung der Mobilstation MS und der Verfahren, welche durch die Mobilstation ausgeführt werden, ist eine programmgesteuerte Prozessoreinrichtung PE, wie beispielsweise ein Mikrocontroller vorgesehen, der auch einen Prozessor CPU und eine Speichereinrichtung SPE umfassen kann.

Je nach Ausführungsvariante können dabei innerhalb oder außerhalb der Prozessoreinrichtung PE weitere - der Prozessoreinrichtung zugeordnete, zur Prozessoreinrichtung gehörende, durch die Prozessoreinrichtung gesteuerte oder die Prozessoreinrichtung steuernde - Komponenten, wie beispielsweise ein digitaler Signalprozessor oder weitere Speichereinrichtungen angeordnet sein, deren prinzipielle Funktion im Zusammenhang mit einer Prozessoreinrichtung zur Steuerung einer Mobilstation einem Fachmann hinreichend bekannt ist, und auf welche daher an dieser Stelle nicht näher eingegangen wird. Die unterschiedlichen Komponenten können über ein Bussystem BUS oder Ein-/Ausgabeschnittstellen und gegebenenfalls geeignete Controller mit dem Prozessor CPU Daten austauschen. In der Speichereinrichtung SPE sind die Programmdaten, wie beispielsweise die Steuerbefehle oder Steuerprozeduren, die zur Steuerung der Mobilstation herangezogen werden, gespeichert.

Außerdem verfügt die Mobilstation über eine Spannungsversorgungseinheit V, welche die wesentlichen Elemente der Mobilstation mit Spannung versorgt. Dabei enthält die Spannungsversorgungseinheit V auch eine Wechselspannungseinheit zur Erzeugung von Wechselspannung, welche zur Erzeugung akustischer Signale, wie beispielsweise Ruftonmelodien oder Erinnerungstöne, einem Piezoelement PIEZO zugeführt wird.

Das Piezoelement besteht aus einer beidseitig metallisierten piezoelektrischen Keramik, die auf einer Trägermembran aufgebracht ist. Zur Erzeugung akustischer Signale wird eine elektrische Wechselspannung an die beiden Metallisierungsflächen des Piezoelementes PIEZO angelegt, wodurch sich die Keramik verformt und so die Trägermembran zu schallerzeugenden Schwingungen angeregt wird.

Durch eine Beschleunigung der Mobilstation ergibt sich eine Verformung der Membran des Piezoelementes. Zur Generierung von Informationen über die Beschleunigung des Piezoelementes und somit der Mobilstation wird die Spannung, welche durch die Verformung der Membran des Piezoelementes hervorgerufen wird, durch geeignete Erfassungsmittel E erfaßt und mittels einer Umsetzeinheit in Informationen über die Beschleunigung der Mobilstation umgesetzt. Je nach Ausführungsvariante wird die erfaßte vom Piezoelement generierte Spannung in eine Schrittzahl eines die Mobilstation tragenden Benutzers, in eine Geschwindigkeit der Mobilstation oder in einen Betriebszustandswechsel der Mobilstation umgesetzt.

Beispielsweise wird beim Gehen eines die Mobilstation tragenden Benutzers durch die periodisch aufeinander folgenden Schritte die Membran des Piezoelementes PIEZO ebenfalls periodisch verformt, was wiederum zur Erzeugung einer periodischen Wechselspannung führt. Diese wird an den Metallisierungsflächen abgegriffen, durch einen Tiefpaß gefiltert, um Störungen zu eliminieren und durch eine geeignete Komparatorschaltung in eine Impulszahl umgesetzt, welche schließlich mittels der Prozessoreinrichtung in eine Schrittzahl oder Entfernung umgesetzt wird und anhand des Displays angezeigt wird.

Die von dem Piezoelement erzeugte Spannung und somit die Beschleunigung der Mobilstation wird in einer Ausführungsvariante der Erfindung mittels der Umsetzeinheit in die Geschwindigkeit der Mobilstation umgesetzt und anhand des Displays dargestellt.

Eine andere Ausgestaltung der Erfindung sieht vor, daß in Abhängigkeit von der Beschleunigung der Mobilstation ein Betriebszustandswechsel der Mobilstation ausgelöst wird. So kann durch ein Anheben der Mobilstation beispielsweise ein Anruf entgegengenommen werden, wohingegen durch ein Ablegen der Mobilstation beispielsweise ein Anruf beendet wird.

Neben den oben erläuterten Ausführungsvarianten der Erfindung liegt eine Vielzahl weiterer Ausführungsvarianten im Rahmen der Erfindung, welche hier nicht weiter beschrieben werden, aber anhand der erläuterten Ausführungsbeispiele einfach in die Praxis umgesetzt werden können.

## Patentansprüche

1. Elektronisches Gerät (MS)
- mit einem Piezoelement (PIEZO) zur Ausgabe eines akustischen Signals, und
- mit einer Wechselspannungseinheit (V) zur Ausgabe einer Wechselspannung, die dem Piezolement (PIEZO) zugeführt wird,
**gekennzeichnet durch**
- eine Spannungserfassungseinheit (E) zur Erfassung einer **durch** das Piezoelement (PIEZO) erzeugten Spannung, und
- eine Umsetzeinheit (PE) zur Umsetzung der erfaßten Spannung in Beschleunigungsinformationen über das Gerät.

2. Elektronisches Gerät nach Anspruch 1,
-bei dem die erfaßte Spannung in eine Schrittzahl eines das Gerät tragenden Benutzers umgesetzt wird.

3. Elektronisches Gerät nach einem der vorhergehenden Ansprüche,
-bei dem die erfaßte Spannung in eine Geschwindigkeit des Gerätes umgesetzt wird.

4. Elektronisches Gerät nach einem der vorhergehenden Ansprüche,
-bei dem die erfaßte Spannung in einen Betriebszustandswechsel des Gerätes umgesetzt wird.
